# EUROPÄISCHE PATENTSCHRIFT

(11) **EP 1 609 706 B1**
(45) Veröffentlichungstag und Bekanntmachung des Hinweises auf die Patenterteilung: **02.01.2008**
(21) Anmeldenummer: 05008030.8
(22) Anmeldetag: 13.04.2005
(51) Int. Cl.: B62D 35/02

(54) **Luftleitelement für ein Kraftfahrzeug**
Streamlining device for a motor vehicle
Dispositif aérodynamique de véhicule automobile

(30) Priorität: 22.06.2004 DE 102004030211
(43) Veröffentlichungstag der Anmeldung: 28.12.2005
(73) Patentinhaber: Dr.Ing. h.c. F. Porsche Aktiengesellschaft, 70435 Stuttgart (DE)
(72) Erfinder: Fritz, Andreas, 75443 Oetisheim (DE); Palmer, Eberhard, 71665 Vaihingen/Enz (DE); Fischer, Rico, 71665 Vaihingen/Enz (DE); Schmid, Ralf, 76228 Karlsruhe/Grünwettersbach (DE)

(56) Entgegenhaltungen:
- DE-A1- 3 525 036
- DE-A1- 3 625 814
- DE-U1- 20 314 128
- GB-A- 2 172 256

## Beschreibung

Die Erfindung bezieht sich auf ein Luftleitelement für ein Kraftfahrzeug, das am Unterboden des Fahrzeugs angeordnet ist.

Aus der DE 36 25 814 C2 ist ein Spoiler bodenseitig am Heck eines Kraftfahrzeugs bekannt, der im Abstand zum Fahrzeugaufbau angeordnet und von Luft umströmt ist. Des weiteren kann der Spoiler auch von einer Unterfläche des Schalldämpfers einer Abgasanlage gebildet sein und ist mit diesem einstückig ausgeführt und ist von der Lage des Schalldämpfers abhängig.

Aufgabe der Erfindung ist es, ein Luftleitelement für ein Kraftfahrzeug zu schaffen, das unabhängig von Fahrzeugelementen anzuordnen und in einfacher Weise montierbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass das Luftleitelement in seiner Anstellung variabel am Schalldämpfer angebracht werden kann und somit auch zu einem Heckabschlussteil ausrichtbar ist, damit eine kontinuierliche Luftströmungsführung ohne Unterbrechung erfolgen kann. Hierzu ist das Luftleitelement aus einer plattenförmigen Schale bestehend, die an einer der Fahrbahn zugerichteten Unterfläche eines am Heck des Fahrzeugs angeordneten Schalldämpfers einer Abgasanlage zur Luftströmungsführung unter einem spitzen Winkel über lösbare oder unlösbare Verbindungselemente gehalten ist. Insbesondere ist die Schale beabstandet zur Unterfläche des Schalldämpfers mit dem spitzen Winkel derart angestellt, dass in Verlängerung der Fläche der Schale etwa niveaugleich eine Unterfläche des Fahrzeughecks verläuft.

Hierdurch wird in vorteilhafter Weise nach der Erfindung erreicht, dass eine Luftführung unabhängig von der Lage des Schalldämpfers erzielt wird, wobei die Schale sich nahezu über die gesamte der Fahrbahn zugerichtete Unterfläche des Schalldämpfers erstrecken kann. Zudem wird erreicht, dass sich eine relativ große Fläche zur gezielten Luftführung ergibt und Verwirbelungen weitestgehend vermieden werden und sich zwischen der Fahrbahn und dem Luftführungselement ein Unterdruck einstellt, welcher eine heckseitige Abtriebskraft bewirkt. Hierzu dient auch, dass die Schale nach innen der Unterfläche des Schalldämpfers zugerichtete umgestellte Kanten aufweist. Insbesondere ist vorgesehen, dass die - in Bezug auf die Fahrtrichtung F des Fahrzeug - vornliegende umgestellte Kante der Schale nach innen zum Schalldämpfer hin derart abgewinkelt ist, dass das freie Kantenende sich über eine Tangentialebene der Unterfläche des Schalldämpfers erstreckt bzw. sich dieses Kantenende oberhalb der Tangentialebene befindet. Durch diese Maßnahme wird eine gezielte Luftführung erreicht, indem es vermieden wird, dass Luftströme zwischen die Unterfläche des Schalldämpfers und der Schale gelangen können und sich störende Verwirbelungen bilden.

Eine einfache Montage der Schale an der Unterfläche des Schalldämpfers erfolgt über sogenannte Verbindungselemente, die z.B. als Blechbügel ausgeführt sind, welche an der Unterfläche des Schalldämpfers befestigt werden, und welche beispielsweise Annietmuttern, Blechmuttern, Schweißmuttern aufweisen, die Befestigungsschrauben zur Festlegung der Schale haltend aufnehmen. Insbesondere sind die Köpfe der Befestigungsschrauben in Vertiefungen der Schale angeordnet, damit eine in diesen Bereichen luftwiderstandsfreie Luftströmung erfolgen kann. Die Blechbügel können nach der Erfindung auch so gestaltet sein, dass die Schale über Stellschrauben an den Bügeln variabel einstellbar ist.

Weitere Einzelheiten der Erfindung sind in den Unteransprüchen gekennzeichnet, wobei es sich in der Praxis als optimal erwiesen hat, wenn an der Unterfläche einer Schale eines Endschalldämpfers die als Luftleitelement ausgebildete Schale zur Luftströmungsführung am Fahrzeugunterboden angeordnet ist, das zur Fahrbahn unter einem Winkel angestellt wird und eine über die gesamte Breite und Länge der Schale des Schalldämpfers sich erstreckende Luftleitfläche aufweist, die niveaugleich mit einer Unterfläche eines heckseitigen Karosserieteils verläuft.

Ein Ausführungsbeispiel der Erfindung ist in den Zeichnungen dargestellt und wird im folgenden näher beschrieben.

Es zeigen
- Fig. 1: eine schematische Darstellung eines heckseitigen Schalldämpfers eines Fahrzeugs mit aufgesetztem Luftleitelement von der Seite her gesehen,
- Fig. 2: eine Schnittdarstellung durch ein Verbindungselement für das Luftleitelement am Schalldämpfer,
- Fig. 3: eine schaubildliche Darstellung auf einen Schalldämpfer ohne Luftleitelement von unten her gesehen mit Verbindungselementen, und
- Fig. 4: eine schaubildliche Darstellung gemäß Fig. 3 auf den Schalldämpfer mit befestigtem Luftleitelement und
- Fig. 5: eine weitere Ausführung eines Verbindungselements.

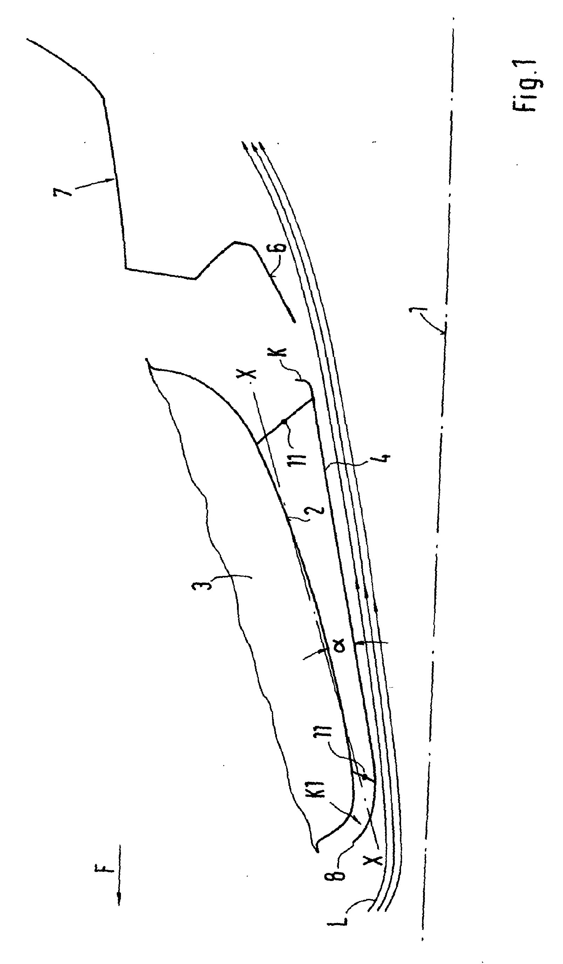

Wie in Fig. 1 näher dargestellt, ist an einer der Fahrbahn 1 zugerichteten Unterfläche 2 eines Schalldämpfers 3 einer nicht näher gezeigten Abgasanlage ein Schild bzw. ein plattenförmiges Schild oder Schale 4 über Verbindungsmittel 11 lösbar oder unlösbar befestigt.

Die Schale 4 oder das Schild bzw. die Platte ist insbesondere beabstandet zur Unterfläche 2 unter einem spitzen Winkel α angeordnet und hierdurch derart angestellt, dass in Verlängerung der Schale 4 etwa niveaugleich sich eine Unterfläche 6 des Fahrzeughecks 7 mit einem Zwischenraum anschließt.

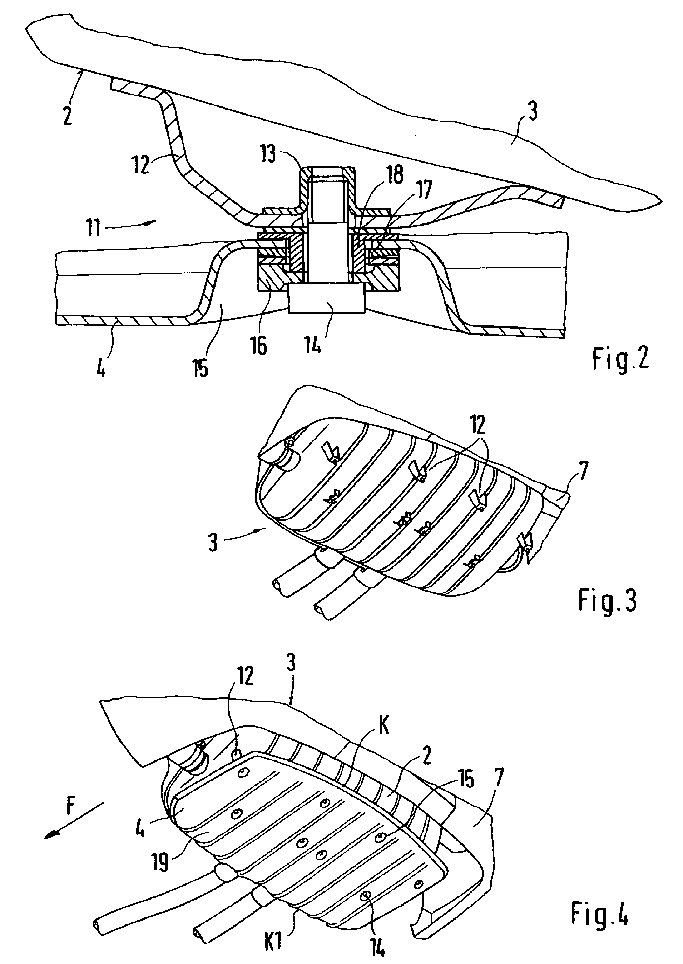

Wie in Fig. 4 gezeigt, kann sich die Schale 4 in etwa über die gesamte Unterfläche 2 erstrecken, wobei auch eine darüber hinausgehende Abdeckung bzw. größere Schale 4 nach der Erfindung möglich wäre, wenn dies die Gegebenheiten einer optimaleren Luftströmungsführung mit einem maximalen Abtriebswert erfordern.

Die Schale 4 weist nach innen der Unterfläche 2 des Schalldämpfers 3 zugerichtete Kanten K, K1 auf. Die Kante K1 ist so weit nach innen abgewinkelt, dass das freie Kantenende 8 sich über eine Tangentialebene X-X der Unterfläche 2 des Schalldämpfers 3 erstreckt, so dass eine Luftströmung nach unten in Richtung Fahrbahn 1 abgelenkt wird und Verwirbelungen zwischen der Unterfläche 2 des Schalldämpfers 3 und der Schale 4 weitestgehend vermieden werden können.

Eine Befestigung der Schale 4 an der Unterfläche 2 des Schalldämpfers 3 erfolgt mittels Verbindungselementen 11, die aus Blechbügeln 12 bestehen und innenseitig beispielsweise Annietmuttern 13 aufweisen, in welche Befestigungsschrauben 14 einsetzbar sind.

Zur Vermeidung von unnötigen Luftwiderständen durch vorragende Schraubenköpfe an der Schale sind diese in Vertiefungen 15 der Schale 4 eingelassen. Zur Befestigung der Schale 4 an der Unterfläche 2 des Schalldämpfers 3 können die Schrauben 14 zwischen dem Schraubenkopf und der Schale 4 eine Distanzscheibe 16 und eine Federscheibe 17 aufweisen, die auf einer Hülse 18 angeordnet sind, um Bauteiltoleranzen auszugleichen. Des Weiteren kann die Befestigungsschraube so ausgeführt sein, dass eine variable Einstellung unter einem bestimmten Winkel zur Unterfläche 2 des Schalldämpfers 3 möglich wird. Weiterhin können die Verbindungselemente so gestaltet sein, dass sie die Funktion einer akustischen, mechanischen und thermischen Entkopplung übernehmen.

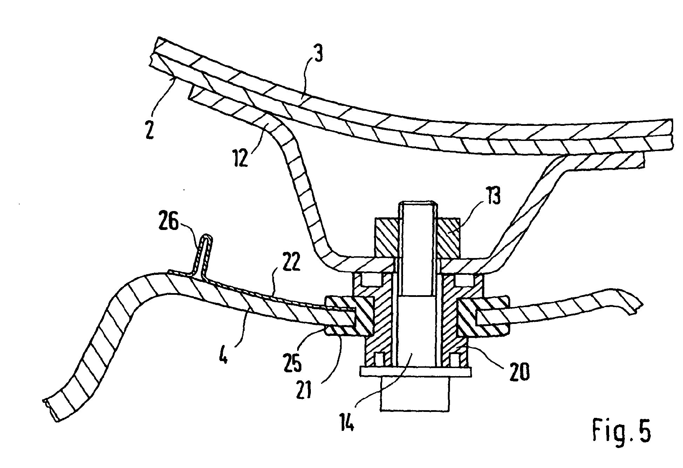

Die Befestigungsschraube 14 des Verbindungselements 11a kann nach einer weiteren Ausführung gem. Fig. 5 in einer Hülse 20 angeordnet sein, die einen Haltering 21 aufweist, in welchem die Schale 4 des Luftleitelements gehalten wird.

Die Schale 4 kann zur Versteifung der Schalenfläche mit längsverlaufenden Sicken 19 oder entsprechenden Einprägungen versehen sein. Des Weiteren kann die bei einer aus Kunststoff bestehenden Schale 4, diese einen Hitzeschutz 22 aus Aluminium oder dgl. aufweisen, das mit einer hachstehenden Rippe 26 versehen sein kann.

## Patentansprüche

1. Luftleitelement für ein Kraftfahrzeug, das am Unterboden des Fahrzeugs angeordnet ist, **dadurch gekennzeichnet, dass** das Luftleitelement aus einer plattenförmigen Schale (4) besteht, die an einer der Fahrbahn (1) zugerichteten Unterfläche (2) eines am Heck (7) des Fahrzeugs angeordneten Schalldämpfers (3) einer Abgasanlage zur Luftströmungsführung unter einem spitzen Winkel (α) über lösbare oder unlösbare Verbindungselemente (11; 11a) gehalten ist.

2. Luftleitelement nach Anspruch 1, **dadurch gekennzeichnet, dass** die Schale (4) beabstandet zur Unterfläche (2) des Schalldämpfers (3) mit dem spitzen Winkel (α) derart angestellt ist, dass in Verlängerung der Fläche der Schale (4) etwa niveaugleich eine Unterfläche (6) des Fahrzeughecks (7) verläuft.

3. Luftleitelement nach den Ansprüchen 1 oder 2, **dadurch gekennzeichnet, dass** die Schale (4) sich nahezu über die gesamte der Fahrbahn (1) zugerichteten Unterfläche (2) des Schalldämpfers (3) erstreckt.

4. Luftleitelement nach den Ansprüchen 1, 2 oder 3, **dadurch gekennzeichnet, dass** die Schale (4) nach innen der Unterfläche (2) des Schalldämpfers (3) zugerichtete umgestellte Kanten (K, K1) aufweist.

5. Luftleitelement nach einem der vorhergehenden Ansprüche, **dadurch gekennzeichnet, dass** die - in Bezug auf die Fahrtrichtung F des Fahrzeugs - vornliegende umgestellte Kante (K1) der Schale (4) nach innen zum Schalldämpfer (3) hin derart abgewinkelt ist, dass das freie Kantenende (8) oberhalb einer Tangentialebene (X-X) der Unterfläche (2) des Schalldämpfers (3) angeordnet ist.

6. Luftleitelement nach einem der vorhergehenden Ansprüche, **dadurch gekennzeichnet, dass** an der Unterfläche (2) des Schalldämpfers (3) als Verbindungselemente (11; 11a) Blechbügel (12) befestigt sind, die festlegbare Muttern (13) aufweisen, welche Befestigungsschrauben (14) zur Festlegung der Schale (4) haltend aufnehmen.

7. Luftleitelement nach Anspruch 6, **dadurch gekennzeichnet, dass** die Köpfe der Befestigungsschrauben (14) in Vertiefungen (15) der Schale (4) angeordnet sind.

8. Luftleitelement nach einem der vorhergehenden Ansprüche, **dadurch gekennzeichnet, dass** die Schale (4) in Fahrzeuglängsrichtung verlaufende parallel liegende Einprägungen (19) oder Sicken aufweisen.

9. Luftleitelement nach Anspruch 1, **dadurch gekennzeichnet, dass** an einer Unterfläche (2) einer Schale eines Endschalldämpfers (3) die das Luftleitelement bildende Schale (4) zur Luftströmungsführung am Fahrzeugunterboden (6) angeordnet ist, das zur Fahrbahn (1) unter dem Winkel (α) angestellt ist und eine über die gesamte Breite und Länge der Schale des Schalldämpfers (3) sich erstreckende Luftleitfläche (Schale 4) aufweist, die niveaugleich mit einer Unterfläche (6) eines heckseitigen Karosserieteils (7) verläuft.

10. Luftleitelement nach einem der vorhergehenden Ansprüche, **dadurch gekennzeichnet, dass** die Verbindungselemente (11; 11a) derart ausgeführt sind, dass die Funktion einer aktustischen, thermischen und mechanischen Entkopplung übernehmbar ist.

11. Luftleitelement nach einem der vorhergehenden Ansprüche, **dadurch gekennzeichnet, dass** das Verbindungselement (11a) aus einer in einer Hülse (20) angeordneten Befestigungsschraube (14) besteht und die Hülse (20) außenseitig einen Haltering (21) aufnimmt, der in einer Umfangsnut (25) die Schale (4) trägt.

## Claims

1. Air guiding element for a motor vehicle, which air guiding element is arranged on the underbody of the vehicle, **characterized in that** the air guiding element is composed of a plate-shaped shell (4) which, for airflow guidance, is held at an acute angle (α) by means of detachable or non-detachable connecting elements (11; 11a) on an undersurface (2), which is aligned towards the road surface (1), of a silencer (3), which is arranged at the rear (7) of the vehicle, of an exhaust system.

2. Air guiding element according to Claim 1, **characterized in that** the shell (4) is arranged spaced apart from the undersurface (2) of the silencer (3) at the acute angle (α) such that an undersurface (6) of the vehicle rear (7) runs as an elongation of the surface of the shell (4) at approximately the same level.

3. Air guiding element according to Claims 1 or 2, **characterized in that** the shell (4) extends almost over the entire undersurface (2), which is aligned towards the road surface (1), of the silencer (3).

4. Air guiding element according to Claims 1, 2 or 3, **characterized in that** the shell (4) has upturned edges (K, K1) which are aligned inward towards the undersurface (2) of the silencer (3).

5. Air guiding element according to one of the preceding claims, **characterized in that** the forward upturned edge (K1) - in relation to the direction of travel F of the vehicle - of the shell (4) is angled inward towards the silencer (3) in such a way that the free edge end (8) is arranged above a tangential plane (X-X) of the undersurface (2) of the silencer (3).

6. Air guiding element according to one of the preceding claims, **characterized in that** sheet metal brackets (12) are fastened as connecting elements (11; 11a) to the undersurface (2) of the silencer (3), which sheet metal brackets (12) have fixable nuts (13) which hold fastening screws (14) in a retentive fashion in order to fix the shell (4).

7. Air guiding element according to Claim 6, **characterized in that** the heads of the fastening screws (14) are arranged in depressions (15) of the shell (4).

8. Air guiding element according to one of the preceding claims, **characterized in that** the shell (4) has embossings (19) or beads which run parallel in the vehicle longitudinal direction.

9. Air guiding element according to Claim 1, **characterized in that** the shell (4), which forms the air guiding element, for airflow guidance at the vehicle underbody (6) is arranged on an undersurface (2) of a shell of a final silencer (3), which air guiding element is arranged at the angle (α) to the road surface (1) and has an air guiding surface (shell 4) which extends over the entire width and length of the shell of the silencer (3), which air guiding surface (4) runs at the same level as an undersurface (6) of a rear-side body part (7).

10. Air guiding element according to one of the preceding claims, **characterized in that** the connecting elements (11; 11a) are designed such that the function of acoustic, thermal and mechanical decoupling can be assumed.

11. Air guiding element according to one of the preceding claims, **characterized in that** the connecting element (11a) is composed of a fastening screw (14) which is arranged in a sleeve (20), and the sleeve (20) holds, at the outside, a retaining ring (21) which supports the shell (4) in a peripheral groove (25).

## Revendications

1. Dispositif aérodynamique de véhicule automobile, qui est disposé sur le dessous de caisse du véhicule, **caractérisé en ce que** le dispositif aérodynamique est constitué d'une coque (4) en forme de plaque qui, afin de diriger l'écoulement de l'air, via des éléments de liaison (11 ; 11a) amovibles ou inamovibles, est fixée sous un angle aigu (α) à une face inférieure (2), tournée vers la chaussée (1), d'un silencieux (3) d'un système d'échappement qui est disposé sur la partie arrière (7) du véhicule.

2. Dispositif aérodynamique selon la revendication 1, **caractérisé en ce que** la coque (4) est inclinée sous l'angle aigu (α) à distance de la face inférieure (2) du silencieux (3) de telle sorte qu'une face inférieure (6) de la partie arrière (7) du véhicule s'étend dans le prolongement de la face de la coque (4), environ au même niveau.

3. Dispositif aérodynamique selon la revendication 1 ou 2, **caractérisé en ce que** la coque (4) s'étend quasiment sur toute la face inférieure (2) du silencieux (3) qui est tournée vers la chaussée (1).

4. Dispositif aérodynamique selon l'une quelconque des revendications 1, 2 ou 3, **caractérisé en ce que** la coque (4) présente des arêtes (K, K1) rabattues vers l'intérieur, dirigées vers la face inférieure (2) du silencieux (3).

5. Dispositif aérodynamique selon l'une quelconque des revendications précédentes, **caractérisé en ce que** l'arête rabattue (K1) de la coque (4) qui se trouve à l'avant - par rapport à la direction de marche F du véhicule - est recourbée vers l'intérieur en direction du silencieux (3) de telle sorte que l'extrémité libre (8) de l'arête est disposée au-dessus d'un plan (X-X) tangentiel à la face inférieure (2) du silencieux (3).

6. Dispositif aérodynamique selon l'une quelconque des revendications précédentes, **caractérisé en ce que** des étriers en tôle (12) sont fixés sur la face inférieure (2) du silencieux (3) comme éléments de liaison (11 ; 11a), et présentent des écrous (13) pouvant être bloqués qui reçoivent et maintiennent des vis de fixation (14) destinées à fixer en position la coque (4).

7. Dispositif aérodynamique selon la revendication 6, **caractérisé en ce que** les têtes des vis de fixation (14) sont disposées dans des renfoncements (15) de la coque (4).

8. Dispositif aérodynamique selon l'une quelconque des revendications précédentes, **caractérisé en ce que** la coque (4) présente des régions repoussées (19) ou des moulures parallèles s'étendant dans la direction longitudinale du véhicule.

9. Dispositif aérodynamique selon la revendication 1, **caractérisé en ce que** la coque (4) constituant le dispositif aérodynamique est disposée sur une face inférieure (2) d'une coque d'un silencieux final (3) afin de diriger l'écoulement de l'air sur le dessous de caisse (6) du véhicule, ledit dispositif étant incliné sous l'angle (α) vers la chaussée (1) et présentant une face de guidage d'air (coque 4) s'étendant sur toute la largeur et sur toute la longueur de la coque du silencieux (3), face qui s'étend au même niveau qu'une face inférieure (6) d'une partie arrière (7) de carrosserie.

10. Dispositif aérodynamique selon l'une quelconque des revendications précédentes, **caractérisé en ce que** les éléments de liaison (11 ; 11a) sont réalisés de telle sorte qu'ils assurent une fonction de désaccouplement acoustique, thermique et mécanique.

11. Dispositif aérodynamique selon l'une quelconque des revendications précédentes, **caractérisé en ce que** l'élément de liaison (11a) est constitué d'une vis de fixation (14) disposée dans un manchon (20), et le manchon (20) reçoit extérieurement une bague de support (21) qui porte la coque (4) dans une rainure circonférentielle (25).
